# EUROPÄISCHE PATENTANMELDUNG

(11) **EP 0 959 370 A2**
(43) Veröffentlichungstag der Anmeldung: **24.11.1999**
(21) Anmeldenummer: 99108990.5
(22) Anmeldetag: 06.05.1999
(51) Int. Cl.: G01S 13/93, G01S 7/35

(54) **Radarverfahren in einem Kraftfahrzeug**

(30) Priorität: 20.05.1998 DE 19822622
(71) Anmelder: DaimlerChrysler Aerospace AG, 81663 München (DE)
(72) Erfinder: Jacobi, Wieland, 89075 Ulm (DE); Mann, Dieter, 89250 Senden (DE); Pannert, Wolfram, 73433 Aalen (DE); Wittekind, Wolfgang, 89278 Nersingen (DE)

(57) **Zusammenfassung**

Die Erfindung betrifft ein Radarverfahren für eine automatische, intelligente Verkehrssteuerung (AICC) in einem KFz.

Um die Entfernung, die Relativgeschwindigkeit und den Winkel eines vorausfahrenden Kraftfahrzeugs sicher erfassen zu können, wird nach der Erfindung vorgeschlagen, daß ein FM-CM-Verfahren verwendet wird, daß bei der Verwendung eines A/D-Wandlers 5 mit 8-bit-Auflösung die notwendige Dynamik mittels einer Pegelumschaltung erzeugt wird, daß die R,V-Informationen in FFTs 6 mit verblockten R- und V-FFTs erzeugt werden, daß in einer Detektion 7 mittels einer R-abhängigen adaptiven CFAR-Schwelle die Nutzsignale vom Rauschen getrennt werden, daß in einer Spurbildung 8 die Detektion direkt den Spuren zugeordnet wird und daß dabei die Zugehörigkeit einer Detektion i zu einer Spur j als Wahrscheinlichkeit r(i,j) berechnet wird.

## Beschreibung

Die Erfindung betrifft ein Radarverfahren für eine automatische, intelligente Verkehrssteuerung (AICC) in einem KFz gemäß dem Oberbegriff des Patentanspruchs1.

Bekannte KFz-Radare sind in ihren Eigenschaften und in ihrem Aufbau wesentlich durch die Verwendung von Pulsradaren bestimmt. Dabei kommen in bekannten Systemen für die Erfassung mehrerer Meßgrößen aufwendige und kostenintensive Mehrwegesysteme zum Einsatz.

In der früher angemeldeten DE 197 32 509.2 ist ein hochauflösendes Radarverfahren beschrieben, das auf einem FM-CW-Verfahren mit Sägezahnmodulation beruht, um eine gleichzeitige Auflösung der Radarszene in Entfernung und Relativgeschwindigkeit zu erreichen. Bei diesem Verfahren wird das Radarecho an der Sendereferenz abgemischt, um das Basisbandsignal zu bilden. Das Verfahren zeichnet sich dadurch aus,
- daß das Basisbandsignal einer jeden Modulationsperiode in einem Analog-Digital-Konverter digitalisiert und mittels einer N-Punkte-Fourier-Transformation in Entfernungs-/Zeitwerte umgewandelt wird,
- daß diese Umwandlung für M zeitlich aufeinanderfolgende Modulationsperioden wiederholt wird,
- daß die ermittelten Entfernungswerte einer jeden Modulationsperiode in einer der jeweiligen Modulationsperiode zugeordneten Zeile eines zweidimensionalen Datenspeichers abgespeichert werden,
- daß die abgespeicherten Entfernungs-/Zeitwerte spaltenweise einer M-Punkte-Fourier-Transformation zur Bildung von Relativgeschwindigkeitswerten unterworfen werden und derart eine Entfernungs-/Geschwindigkeitsmatrix der beobachteten Radarszene erzeugt wird.

Bei dem Verfahren erfolgt im Analogteil des Radarsensors eine frequenz- und damit entfernungsabhängige Pegelkompensation bzw. mittels eines dem A/D-Wandler vorgeschalteten Antialiasingfilters eine Frequenzbegrenzung der Basisbandsignale zu höheren Frequenzen hin. Von den mit der N-Punkte-Fourier-Transformation ermittelten N Entfernungs-/Zeitwerten werden in einer Ausführungsform des Verfahrens nur N_{R} < N/2 Werte zur nachfolgenden Signalverarbeitung abgespeichert und weiterverarbeitet. Die eingesetzte Fourier-Transformationen (z.B. die schnelle Fouriertransformation (FFT)) arbeiten mit geeigneten Datenfenstern, um Nebenzipfel bei den Auflösungszellen der Entfernungs/Geschwindigkeitsmatrix auf einen vorgebbaren Wert abzusenken.

Der Erfindung liegt die Aufgabe zugrunde ein preiswertes Radarverfahren für ein AICC in einem KFz zu schaffen, das Radarsysteme mit geringem Platzbedarf ermöglicht. Das Radarverfahren soll von vorausfahrenden KFz die Entfernung, die Relativgeschwindigkeit und den Winkel erfassen und für die Verwendung in einem AICC aufbereiten.

Diese Aufgabe wird erfindungsgemäß durch die im Patentanspruch 1 angegebenen Merkmale gelöst. Weiterbildungen der Erfindung sind in den Unteransprüchen angegeben.

Mit dem erfindungsgemäßen Verfahren ist eine Anpassung der Auswertung an einen FM-CW-Radarsensor möglich, der gegenüber einem Pulsradarsensor preiswerter ist. Der Lösungsvorschlag betrifft eine vorteilhafte digitale Erfassung und Auswertung der Meßwerte und umfaßt mehrere Auswertungsschritte. Die Vorteile des erfindungsbemäßen Radarverfahrens sind durch eine rechenaufwandsgünstige Programmierung, durch eine Einbeziehung der Historie bei der Zuordnung Detektion <> Spur und durch eine Beherrschung von Situationen, in denen es aufgrund der Ausdehnung der Objekte in einer R,V-Matrix zu Verschmelzungen von eng benachbarten, realen Objekten kommen kann gekennzeichnet; z.B. bei einem langsamen Überholer eines vorausfahrenden PKW.

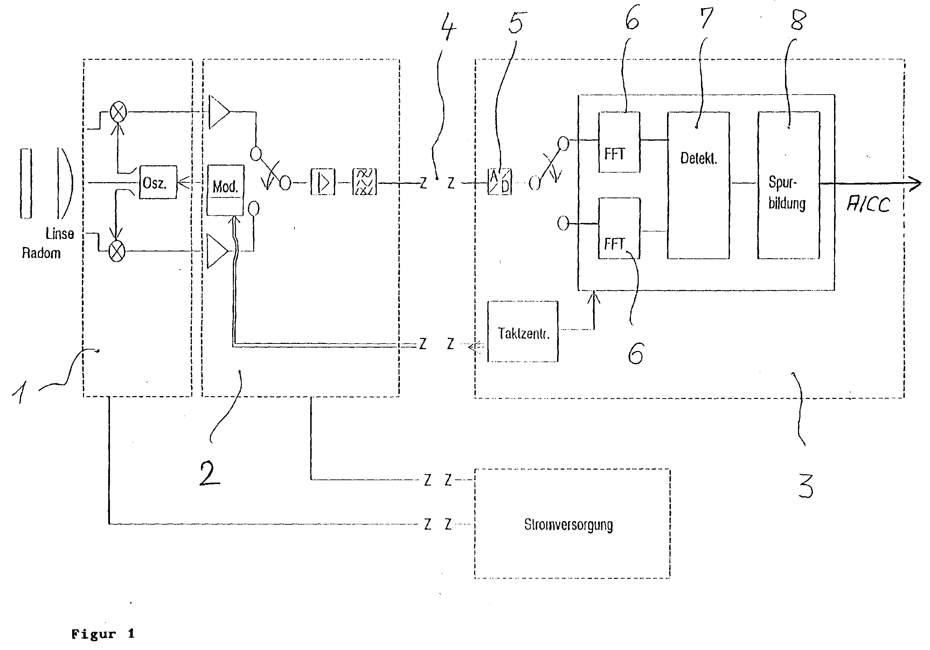

Anhand der Zeichnung wird nachstehend ein Ausführungsbeispiel der Erfindung näher erläutert. Fig.1 zeigt ein Blockschaltbild für das erfindungsgemäße Radarverfahren.

Das in Fig.1 gezeigte Blockschaltbild zeigt mit einem HF-Block 1 und einer Video/Mod-Platine 2 die für einen FM-CW-Radarsensor üblichen analogen Signalbausteine. Die digitale Signalverarbeitung erfolgt auf einer DSV-Platine 3, an deren Signaleingang über eine Kabelverbindung 4 das vom Radarsensor ermitteltete Analogsignal der Radarszene eingespeist ist. Auf der DSV-Platine 3 wird das Analogsignal in einem A/D-Wandler 5 digitalisiert.

Das erfindungsgemäße Verfahren verwendet für die Umwandlung der analogen Meßwerte des Radarsensors einen kostengünstigen A/D-Wandler 5 mit 8-bit-Auflösung bei einer Abtastrate von 2 MHz. Um mit dieser geringen Bitzahl die notwendige Dynamik von mehr als 50 dB zu gewährleisten, ist eine Pegelumschaltung für den A/D-Wandler in das Verfahren implementiert. Diese Pegelumschaltung wird von der Signalamplitude hinter dem A/D-Wandler 5 ausgelöst. Wird ein Schwellwert innerhalb einer bestimmten Zeitspanne von einer vorgegebenen Anzahl von Werten überschritten, so wird eingangsseitig eine analoge Verstärkungsumschaltung ausgelöst. Gleichzeitig wird das digitale Signal um den gleichen Faktor verstärkt, so daß die Pegelverhältnisse der digitalen Verarbeitung ungeändert bleiben. Die Pegelumschaltung des A/D-Wandlers 5 ist aus Gründen der Übersichtlichkeit in Fig. 1 nicht näher ausgeführt.

Beim FM-CW-Verfahren werden bekannterweise die R-/V-Tore über eine Frequenzanalyse des Basisbandes erzeugt. Im einfachsten Fall erhält man die R-/V-Information aus einer M*N-Punkte FFT 6 nach einer Umsortierung der Frequenztore. Das sind M Rampen und N Abtastwerte pro Rampe. Erfindungsgemäß findet dahingegen eine geblockte Verarbeitung mit M Stück N-Punkte-R-FFTs und Nᵣ Stück M-Punkte-V-FFTs statt. Die R-FFTs sind reell und bilden N/2 gültige Werte, die V-FFTs sind komplex. Der Vorteil dieser Verarbeitung liegt darin, daß die R-Tore selektiv bearbeitet werden können (Nᵣ < N/2) und daß weniger Speicherbedarf für die Drehfaktoren der FFTs 6 benötigt wird. Die FFTs 6 sind wegen der im FM-CW-Verfahren bekannten Taktumschaltung doppelt ausgeführt.

Weiterhin existiert beim bekannten FM-CW-Verfahren prinzipiell ein Signal in kurzen Entfernungen, welches das Übersprechen vom Sende- auf den Empfangszweig darstellt und dadurch bedingt ist, daß gleichzeitig Sende- und Empfangsbetrieb vorliegt. Diese Signal blockiert üblicherweise das 1. und das 2. Tor (0 -10m); bzw. es wird dadurch dort ein Objekt vorgetäuscht.

Erfindungsgemäß wird dieses Übersprechen in zwei Stufen kompensiert .Für V_{eigen} > 15 km/h wird das Übersprechsignal (Betrag) hart kompensiert; für V_{eigen} < 15 km/h wird das Übersprechsignal (Betrag) geschätzt und die Änderung des Signales beobachtet, um reale Objekte im 1. oder 2. R-Tor bei langsamer Fahrt, z.B. im Stadtverkehr, an der Ampel oder im Stau, vom Übersprechsignal unterscheiden zu können.

Die R- und V-Tore aus den beiden FFTs werden zu einer Matrix in der Detektion 7 angeordnet. Die Leistungsverteilung innerhalb dieser R,V-Matrix wird zur Detektion von vorhandenen Objekten und Bestimmung von Entfernung und Geschwindigkeit herangezogen. In dem erfindungsgemäßen Verfahren erfolgt die Detektion mittels einer adaptiven CFAR-Schwelle, die Nutzsignale vom Rauschen trennt. Die Schwelle ist R-abhängig gestaltet, um dem R-abhängigen Rauschpegel gerecht zu werden. Der Wert der Schwelle für eine bestimmete Entfernung für den nächsten Zyklus wird durch Mittelung über die V-Zellen gebildet, die im aktuellen Zyklus unter der Schwelle liegen.

Das erfindungsgemäße Verfahren beinhaltet eine Spurbildung 8, welche die Aufgabe hat, einzelne Objekte über die Zeit zu verfolgen und sofern vorhanden, die für die Aufgabenstellung relevanten Objekte auszuwählen. Dazu sind mehrere Verfahrensschritte vorgesehen:
- die Initialisierung von Spuren;
- die Zuordnung der erfolgten Detektionen zu bestehenden Spuren ;
- die Filterung/das Update der Kennwerte (Entfernung, Geschwindigkeit und Winkel) einer Spur;
- das Löschen von Spuren, die nicht mehr mit neuen Daten versorgt werden und
- die Auswahl/die Priorisierung von bestimmten Spuren nach geeigneten Kriterien.

Ein Besonderheit der implementierten Spurbildung 8 liegt darin, daß sie ohne einen Zwischenschritt die Detektion direkt den Spuren zuordnet. Selbst für ein Punktziel liegen bedingt durch das erfindungsgemäße Verfahren bis zu neun Detektionen vor. Reale Objekte sind in der R,V-Matrix also ausgedehnt.

Wegen dieser Ausdehnung realer Objekte findet in bekannten Verfahren noch ein Zwischenschritt, die sog. Objektbildung statt. Diese Objektbildung faßt zusammengehörige Detektionen zusammen und berechnet für das zugehörige Objekt entsprechende Mittelwerte der Kenngrößen. Aus diesen Objekten werden dann die Spuren gebildet.

Die Schwierigkeit dieser bekannten Spurbildung liegt in gewissen Situationen darin, zu entscheiden was "zusammengehörig" beinhaltet und es müssen teilweise komplizierte Verfahren angewendet werden, um nahe zusammenliegende Detektionen, die zu beispielsweise zwei realen Objekten gehören, als solche zu erkennen, da die Detektionen zu einem Objekt verschmelzen können.

Bei der Zuordnung können Detektionen auch zu mehreren Spuren gleichzeitig gehören. Die Zugehörigkeit einer Detektion i zu einer Spur j wird erfindungsgemäß in der Spurbildung 8 als Wahrscheinlichkeit r(i,j) berechnet, die von einem verallgemeinerten Abstandandsmaß abhängt.

## Patentansprüche

1. Radarverfahren für eine automatische, intelligente Verkehrssteuerung (AICC) in einem KFz , dadurch gekennzeichnet, daß ein FM-CM-Verfahren verwendet wird, daß bei der Verwendung eines A/D-Wandlers 5 mit 8-bit-Auflösung die notwendige Dynamik mittels einer Pegelumschaltung erzeugt wird, daß die R,V-Informationen in FFTs 6 mit verblockten R- und V-FFTs erzeugt werden, daß in einer Detektion 7 mittels einer R-abhängigen adaptiven CFAR-Schwelle die Nutzsignale vom Rauschen getrennt werden, daß in einer Spurbildung 8 die Detektion direkt den Spuren zugeordnet wird und daß dabei die Zugehörigkeit einer Detektion i zu einer Spur j als Wahrscheinlichkeit r(i,j) berechnet wird.

2. Radarverfahren nach Anspruch1, dadurch gekennzeichnet, daß das für kurze Entfernungen übliche Übersprechen vom Sende- auf den Empfangsbereich zweistufig kompensiert wird.
